# EUROPEAN PATENT APPLICATION

(11) **EP 4 786 430 A1**
(43) Date of publication of application: **05.08.2026**
(21) Application number: 24869625.4
(22) Date of filing: 20.03.2024
(51) Int. Cl.: C03C 15/00, C03C 23/00, C03B 32/02, B44C 5/04

(54) **CURVED GLASS AND PREPARATION METHOD THEREFOR**

(30) Priority: 27.09.2023 CN 202311277424
(71) Applicant: BYD Company Limited, Shenzhen, Guangdong 518118 (CN)
(72) Inventor: PEI, Yulei, Shenzhen, Guangdong 518118 (CN); ZHANG, Jiaxin, Shenzhen, Guangdong 518118 (CN); CUI, Jingna, Shenzhen, Guangdong 518118 (CN)
(74) Representative: Taor, Simon Edward William
(86) International application number: PCT/CN2024/082640
(87) International publication number: WO 2025/066054

(57) **Abstract**

Curved glass and a preparation method therefor. The curved glass comprises a glass base layer (1) and a texture layer (2) formed on one or both sides of the glass base layer (1), wherein the texture layer (2) and the glass base layer (1) are of an integrated structure, and the thickness of the texture layer (2) is in a range of 1-20 µm.

## Description

### CROSS-REFERENCE TO RELATED APPLICATIONS

This application claims priority to Chinese Patent Application No. 202311277424.8, filed on September 27, 2023 and entitled "CURVED GLASS AND PREPARATION METHOD THEREFOR", which is incorporated herein by reference in its entirety.

### TECHNICAL FIELD

This application relates to the glass manufacturing and processing field, and in particular, to curved glass and a preparation method therefor.

### BACKGROUND

Curved glass is glass that has a curved structure and that is formed by hot bending flat glass by using a special-shaped mold.

It is difficult to directly make a fine pattern on the curved glass by using an existing decorative process. Currently, in the conventional technology, curved glass with an optical texture decoration is finally realized by flatbed-transfer-printing texture effect on a PET film, performing a decoration process such as coating and screen printing, and bonding the film to the curved glass by using a bonding device. Bonding the PET film to the glass increases an overall thickness of the glass. In addition, a texture and the glass are separated by a polyester resin (PET) and an adhesive (OCA optical adhesive). Consequently, transmittance is low, and presented texture effect is poor.

### SUMMARY

This application is intended to resolve at least one of technical problems in the conventional technology. Therefore, this application provides curved glass. A glass base layer of the curved glass and a texture layer are of an integrated structure, and the texture layer is directly formed on a glass surface, so that the overall curved glass is lighter and thinner, presents better effect, and has better light transmittance.

This application further provides a preparation method for the foregoing curved glass.

This application further provides curved glass prepared by applying the preparation method for the curved glass.

The curved glass in this application includes a glass base layer and a texture layer formed on one or both sides of the glass base layer, the texture layer and the glass base layer are of an integrated structure, and a thickness of the texture layer is in a value range of 1-20 µm.

In the curved glass in this application, the texture layer is formed without transfer-printing a texture by using a polyester resin (PET) or performing bonding by using an adhesive (OCA optical adhesive), so that the overall curved glass is lighter and thinner (without PET and OCA layers), presents better effect, and has better light transmittance.

In some embodiments, a thickness of the texture layer is in a value range of 1-10 µm.

In some embodiments, a width of a texture at the texture layer is in a value range of 1-200 µm.

In some embodiments, the width of the texture at the texture layer is in a value range of 5-150 µm.

In some embodiments, a spacing d between adjacent textures is in a value range of 1-200 µm.

In some embodiments, the spacing d between adjacent textures is in a value range of 5-150 µm.

In some embodiments, a thickness of the curved glass is in a value range of 0.3-3 mm.

In some embodiments, the thickness of the curved glass is in a value range of 0.5-2 mm.

In some embodiments, the texture at the texture layer presents at least one of a regular pattern and an irregular pattern.

In some embodiments, the texture at the texture layer presents at least one of a rectangle and a wave.

The preparation method for the curved glass in this application includes the following steps:
(1) forming a film layer on one or both sides of a glass substrate by using a nucleating agent;
(2) removing a part of the film layer, and retaining a predetermined texture pattern on the glass substrate;
(3) processing the glass substrate with the texture pattern, so that a glass surface layer in a texture pattern region is microcrystallized; and
(4) performing hot bending processing on a glass base body obtained through processing in step (3), and then performing etching.

According to the preparation method for the curved glass in this application, the glass substrate is partially microcrystallized. A texture layer with light-shadow effect may be etched based on different etching speeds in a microcrystalline region and an amorphous region. In this way, the formed texture layer and a glass base layer are of an integrated structure, so that the overall curved glass is lighter and thinner and has excellent light transmittance.

In some embodiments, in step (1), a thickness of the film layer is in a value range of 10-200 nm.

In some embodiments, in step (1), the thickness of the film layer is in a value range of 50-150 nm.

In some embodiments, the nucleating agent is selected from at least one of a metal nucleating agent, an oxide nucleating agent, and a fluoride nucleating agent.

In some embodiments, the metal nucleating agent includes at least one of Ag, Cu, and Pt.

In some embodiments, the oxide nucleating agent includes at least one of TiO2 and ZrO2.

In some embodiments, the fluoride nucleating agent includes at least one of CaF2 and MgF2.

In some embodiments, the glass substrate includes at least one of lithium-aluminum-silicon glass, calcium-aluminum-silicon glass, and magnesium-aluminum-silicon glass.

In some embodiments, in step (2), the part of the film layer is removed through laser engraving.

In some embodiments, the texture pattern is at least one of a regular pattern and an irregular pattern.

In some embodiments, the texture pattern is at least one of a rectangle and a wave.

In some embodiments, in step (3), a manner of the processing is heat treatment.

In some embodiments, a process of the heat treatment is performed in the presence of a protective gas, and a condition for the heat treatment includes: a heating rate is 1°C/min to 10°C/min, a temperature is 550°C to 880°C, and a time is 1h to 6h.

In some embodiments, the condition for the heat treatment includes: the heating rate is 5°C/min to 10°C/min.

In some embodiments, the condition for the heat treatment includes: the temperature is 600°C to 850°C.

In some embodiments, the condition for the heat treatment includes: the time is 2h to 4h.

In some embodiments, the process of the heat treatment includes: in the presence of the protective gas, heating up to 550°C to 650°C at the heating rate of 5°C/min to 10°C/min, holding for 0.5h to 2h, heating up to 700°C to 880°C at a heating rate of 1°C/min to 5°C/min, and holding for 1h to 4h.

In some embodiments, in step (4), a condition for the hot bending processing includes: a temperature is 700°C to 800°C, and a time is 10 min to 30 min.

In some embodiments, in step (4), a process of the etching includes: immersing, in an etching solution, the glass base body after hot bending processing.

In some embodiments, the etching solution includes HF.

The overall curved glass prepared by applying the preparation method for the curved glass in this application is lighter and thinner, and has excellent light transmittance.

A part of additional aspects and advantages of this application will be given in the following description, and a part will become apparent from the following description, or will be learned through practice of this application.

### BRIEF DESCRIPTION OF DRAWINGS

FIG. 1 is a schematic top view of curved glass according to this application;
FIG. 2 is a schematic cross-sectional diagram of curved glass according to this application; and
FIG. 3 is a schematic cross-sectional diagram of curved glass prepared by transfer-printing a texture on PET and then bonding the PET to glass in the conventional technology.

Reference numerals:
glass base layer 1 and texture layer 2.

### DESCRIPTION OF EMBODIMENTS

The following describes in detail embodiments of this application, and examples of the embodiments are shown in the accompanying drawings. Same or similar reference numerals throughout the accompanying drawings indicate same or similar elements or elements having same or similar functions. The following embodiments described with reference to the accompanying drawings are exemplary and are merely intended to explain this application, but should not be understood as a limitation on this application.

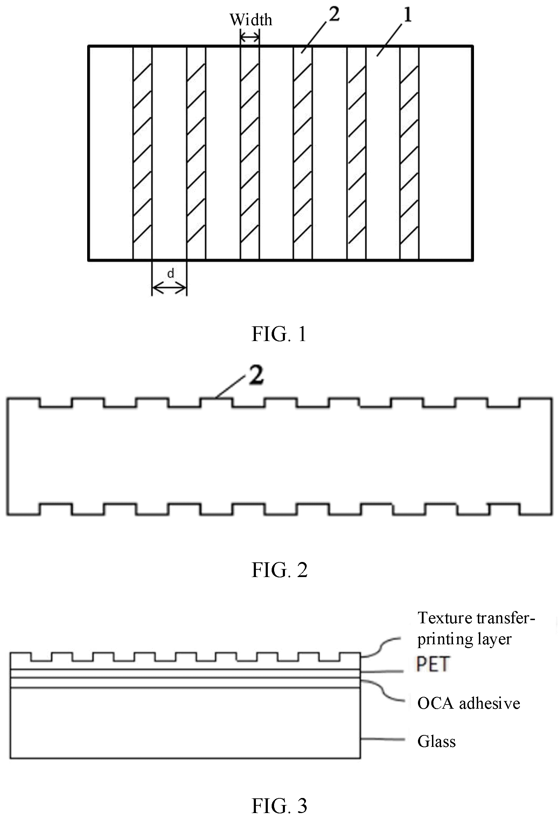

As shown in FIG. 1 and FIG. 2, curved glass in this application includes a glass base layer 1 and a texture layer 2 formed on one or both sides of the glass base layer 1, and the texture layer 2 and the glass base layer 1 are of an integrated structure. In the curved glass designed in this application, the texture layer is formed without transfer-printing a texture by using a polyester resin (PET) or performing bonding by using an adhesive (OCA optical adhesive), so that the overall curved glass is lighter and thinner (without PET and OCA layers), presents better effect, and has better light transmittance.

In the curved glass in this application, the texture layer 2 may be formed on one or both sides of the curved glass. In some embodiments, the texture layer 2 is formed on both sides of the curved glass, to avoid glass deformation caused by one-sided crystallization and etching of the glass. In this specification, both sides are two opposite surfaces of the curved glass.

In the curved glass in this application, a thickness of the texture layer 2 of the curved glass is in a value range of 1-20 µm.

In some embodiments, the thickness of the texture layer 2 of the curved glass may be in a value range of 1-10 µm, for example, may be 1 µm, 2 µm, 3 µm, 4 µm, 5 µm, 6 µm, 7 µm, 8 µm, 9 µm, or 10 µm. Based on such a thickness size of the texture layer 2, the texture layer 2 of the curved glass has better light-shadow effect.

In the curved glass in this application, a width of a texture at the texture layer 2 is not specifically limited, and a width size of the texture may be designed according to a requirement.

Herein, the width of the texture at the texture layer 2 may be in a value range of 1-200 µm.

In some implementations, the width of the texture at the texture layer 2 may be in a value range of 5-150 µm, for example, may be 5 µm, 10 µm, 20 µm, 30 µm, 50 µm, 80 µm, 100 µm, 120 µm, 130 µm, or 150 µm.

In the curved glass in this application, a spacing d between adjacent textures is not specifically limited, and a spacing size between adjacent textures may be designed according to a requirement.

Herein, the spacing d between adjacent textures may be in a value range of 1-200 µm.

In some implementations, the spacing d between adjacent textures may be in a value range of 5-150 µm, for example, may be 5 µm, 10 µm, 20 µm, 30 µm, 50 µm, 80 µm, 100 µm, 120 µm, 130 µm, or 150 µm.

In the curved glass in this application, a thickness of the curved glass is not specifically limited, and a proper thickness size of the curved glass may be determined according to a requirement.

Herein, the thickness of the curved glass may be in a value range of 0.3-3 mm.

In some implementations, the thickness of the curved glass may be in a value range of 0.5-2 mm, for example, may be 0.5 mm, 0.6 mm, 0.8 mm, 1 mm, 1.2 mm, 1.4 mm, 1.5 mm, 1.6 mm, 1.8 mm, or 2 mm.

In the curved glass in this application, a proper texture pattern may be determined for the texture at the texture layer 2 according to a requirement.

Herein, the texture at the texture layer 2 presents at least one of a regular pattern and an irregular pattern.

In some implementations, the texture at the texture layer 2 presents at least one of a rectangle and a wave.

In this application, a material of the curved glass may be a conventional glass material in the art.

In some embodiments, the material of the curved glass is at least one of lithium-aluminum-silicon glass, calcium-aluminum-silicon glass, and magnesium-aluminum-silicon glass. For example, the curved glass may be entirely made of the lithium-aluminum-silicon glass, the calcium-aluminum-silicon glass, or the magnesium-aluminum-silicon glass; or may be made of any two of the lithium-aluminum-silicon glass, the calcium-aluminum-silicon glass, or the magnesium-aluminum-silicon glass. The curved glass may alternatively include three components: the lithium-aluminum-silicon glass, the calcium-aluminum-silicon glass, and the magnesium-aluminum-silicon glass. A content of the lithium-aluminum-silicon glass, a content of the calcium-aluminum-silicon glass, and a content of the magnesium-aluminum-silicon glass may be adjusted according to an actual requirement, so that the curved glass can be applied to different environments.

A preparation method for the curved glass in this application includes the following steps:
(1) forming a film layer on one or both sides of a glass substrate by using a nucleating agent;
(2) removing a part of the film layer, and retaining a predetermined texture pattern on the glass substrate;
(3) processing the glass substrate with the texture pattern, so that a glass surface layer in a texture pattern region is microcrystallized; and
(4) performing hot bending processing on a glass base body obtained through processing in step (3), and then performing etching.

According to the preparation method for the curved glass in this application, the glass substrate is partially microcrystallized. A texture layer with light-shadow effect may be etched based on different etching speeds in a microcrystalline region and an amorphous region. In this way, the formed texture layer and a glass base layer are of an integrated structure, so that the overall curved glass is lighter and thinner and has excellent light transmittance.

In step (1), a thickness size of the texture layer of the prepared curved glass may be adjusted by controlling a thickness of the film layer formed on the glass substrate.

In the method in this application, the thickness of the formed film layer may be in a value range of 10-200 nm.

In some implementations, in step (1), the thickness of the film layer is in a value range of 50-150 nm. The thickness of the film layer is controlled to be in such a range, so that a thickness of the texture layer of the prepared curved glass can be adjusted in a value range of 1-20 µm, thereby ensuring that the texture layer of the curved glass has good light-shadow effect.

In step (1), the film layer may be formed on one side of the glass substrate, or may be formed on both sides of the glass substrate. In some embodiments, the film layer is formed on both sides of the glass substrate, to avoid glass deformation that occurs during single-sided crystallization of the glass substrate and subsequent etching.

In step (1), the used nucleating agent may be selected from at least one of a metal nucleating agent, an oxide nucleating agent, and a fluoride nucleating agent.

In some implementations, the metal nucleating agent may include at least one of Ag, Cu, and Pt.

In some implementations, the oxide nucleating agent may include at least one of TiO2 and ZrO2.

In some implementations, the fluoride nucleating agent may include at least one of CaF2 and MgF2.

In this application, after a surface of the glass substrate is partially microcrystallized by selecting the nucleating agent, a texture layer with light-shadow effect may be directly etched on the glass substrate based on different etching speeds in a microcrystalline region and an amorphous region. In this way, the curved glass whose texture layer and glass base layer are of an integrated structure is formed.

In step (1), a method for forming the film layer on the glass substrate may be a conventional method in the art, provided that a film with a uniform thickness can be formed. In some embodiments, the film layer is formed on the glass substrate in at least one manner of evaporation plating and sputtering plating.

In step (1), the glass substrate may be a substrate of a conventional glass material in the art. In some embodiments, the glass substrate includes at least one of lithium-aluminum-silicon glass, calcium-aluminum-silicon glass, and magnesium-aluminum-silicon glass.

In step (2), a process of removing the part of the film layer may be implemented in a conventional method in the art. In some embodiments, the part of the film layer is removed through laser engraving, to form a texture pattern with a clear outline.

In step (2), the texture pattern may be selected and determined according to a requirement.

Herein, the texture at the texture layer presents at least one of a regular pattern and an irregular pattern.

In some implementations, a texture at the texture layer presents at least one of a rectangle and a wave.

In step (3), a manner of the processing is heat treatment.

In some embodiments, a process of the heat treatment is performed in the presence of a protective gas, and a condition for the heat treatment includes: a heating rate is 1°C/min to 10°C/min, a temperature is 550°C to 880°C, and a time is 1h to 6h.

In some embodiments, the condition for the heat treatment includes: the heating rate is 5°C/min to 10°C/min.

In some embodiments, the condition for the heat treatment includes: the temperature is 600°C to 850°C.

In some embodiments, the condition for the heat treatment includes: the time is 2h to 4h.

In some embodiments, to achieve better microcrystallization effect (for example, form a crystal with a uniform size), so that the texture layer of the prepared curved glass has better light-shadow effect, the process of the heat treatment includes: in the presence of the protective gas, heating up to 550°C to 650°C at the heating rate of 5°C/min to 10°C/min, holding for 0.5h to 2h, heating up to 700°C to 880°C at a heating rate of 1°C/min to 5°C/min, and holding for 1h to 4h.

In this application, the protective gas may be a conventional selection in the art.

Herein, the protective gas may be nitrogen.

In step (4), a condition for the hot bending processing may include: a temperature is 700°C to 800°C, and a time is 10 min to 30 min.

In step (4), a process of the etching may include: immersing, in an etching solution, the glass base body after hot bending processing. A condition for the etching may include: a temperature is 15°C to 40°C, preferably 20°C to 25°C, and a time is 100s to 1000s, preferably 500s to 800s.

In this application, the etching solution may be an etching solution commonly used in a glass etching process.

In some embodiments, the etching solution includes an HF solution.

This application further provides curved glass prepared in the foregoing method. A texture layer of the curved glass is directly formed on a surface (one or both sides) of the glass, and a glass base layer and the texture layer are of an integrated structure. Therefore, the texture layer is formed without transfer-printing a texture by using a polyester resin (PET) or performing bonding by using an adhesive (OCA optical adhesive), so that the overall curved glass is lighter and thinner (without PET and OCA layers), presents better effect, and has better light transmittance.

The following further describes the curved glass and the preparation method therefor in this application by using embodiments. The embodiments are implemented in a case of the technical solutions of this application, and provide a detailed implementation and a specific operation process. However, the protection scope of this application is not limited to the following embodiments.

An experimental method in the following embodiments is a conventional method in the art unless otherwise specified. An experimental material used in the following embodiments may be commercially purchased unless otherwise specified.

### Comparative example 1

160 mm×75 mm×0.6 mm lithium-aluminum-silicon flat glass is selected as a glass substrate, and hot bending processing is performed on the glass substrate for 20 min at 780°C, to obtain a curved glass base body.

Curved glass D1 whose surface has a texture in FIG. 3 is obtained by flatbed-transfer-printing texture effect on a PET film, performing coating and screen printing, and bonding the film to curved glass by using an OCA optical adhesive and a bonding device.

### Embodiment 1

(1) Select 160 mm×75 mm×0.6 mm lithium-aluminum-silicon flat glass as a glass substrate, and form a TiO2 film layer on both sides of the glass substrate through evaporation plating, where a thickness of the film layer is 100 nm.
(2) Remove a part of the film layer through laser engraving, and retain a rectangular texture pattern on the glass substrate.
(3) Under a nitrogen atmosphere, heat up the glass substrate with the texture pattern to 600°C at 10°C/min, hold for 1h, heat up to 750°C at 2°C/min, and hold for 3h.
(4) Perform, at 780°C for 20 min, hot bending processing on a glass base body obtained through processing in step (3), and immerse the glass base body in an HF etching solution for etching for 500s, to obtain curved glass A1.

### Embodiment 2

(1) Select 160 mm×75 mm×0.6 mm lithium-aluminum-silicon flat glass as a glass substrate, and form an Ag film layer on both sides of the glass substrate through sputtering plating, where a thickness of the film layer is 50 nm.
(2) Remove a part of the film layer through laser engraving, and retain a rectangular texture pattern on the glass substrate.
(3) Under a nitrogen atmosphere, heat up the glass substrate with the texture pattern to 650°C at 8°C/min, hold for 0.5h, heat up to 700°C at 1°C/min, and hold for 4h.
(4) Perform, at 800°C for 10 min, hot bending processing on a glass base body obtained through processing in step (3), and immerse the glass base body in an HF etching solution for etching for 650s, to obtain curved glass A2.

### Embodiment 3

(1) Select 160 mm×75 mm×0.6 mm lithium-aluminum-silicon flat glass as a glass substrate, and form a CaF2 film layer on both sides of the glass substrate through evaporation plating, where a thickness of the film layer is 150 nm.
(2) Remove a part of the film layer through laser engraving, and retain a rectangular texture pattern on the glass substrate.
(3) Under a nitrogen atmosphere, heat up the glass substrate with the texture pattern to 550°C at 5°C/min, hold for 2h, heat up to 880°C at 5°C/min, and hold for 1h.
(4) Perform, at 700°C for 30 min, hot bending processing on a glass base body obtained through processing in step (3), and immerse the glass base body in an HF etching solution for etching for 800s, to obtain curved glass A3.

### Embodiment 4

(1) Select 160 mm×75 mm×0.6 mm calcium-aluminum-silicon flat glass as a glass substrate, and form a TiO2 film layer on both sides of the glass substrate through evaporation plating, where a thickness of the film layer is 100 nm.
(2) Remove a part of the film layer through laser engraving, and retain a rectangular texture pattern on the glass substrate.
(3) Under a nitrogen atmosphere, heat up the glass substrate with the texture pattern to 620°C at 7°C/min, hold for 1h, heat up to 800°C at 3°C/min, and hold for 2h.
(4) Perform, at 750°C for 20 min, hot bending processing on a glass base body obtained through processing in step (3), and immerse the glass base body in an HF etching solution for etching for 700s, to obtain curved glass A4.

### Embodiment 5

(1) Select 160 mm×75 mm×0.6 mm magnesium-aluminum-silicon flat glass as a glass substrate, and form a TiO2 film layer on both sides of the glass substrate through evaporation plating, where a thickness of the film layer is 100 nm.
(2) Remove a part of the film layer through laser engraving, and retain a rectangular texture pattern on the glass substrate.
(3) Under a nitrogen atmosphere, heat up the glass substrate with the texture pattern to 580°C at 6°C/min, hold for 1h, heat up to 820°C at 4°C/min, and hold for 2.5h.
(4) Perform, at 750°C for 25 min, hot bending processing on a glass base body obtained through processing in step (3), and immerse the glass base body in an HF etching solution for etching for 600s, to obtain curved glass A5.

### Test example

The curved glass prepared in Embodiment 1 to Embodiment 5 and Comparative example 1 is used as detection objects. Light transmittance is detected by using a spectrophotometer, and a thickness, a width, and a spacing of a texture on a surface of the curved glass are detected by using an optical microscope. A result is shown in Table 1.

**Table 1**

| | Curved glass thickness (mm) | Texture thickness (µm) | Texture width (µm) | Texture spacing (µm) | Light transmittance (%) |
|---|---|---|---|---|---|
| Comparative example 1 | 0.61 | 10 | 50 | 80 | 85 |
| Embodiment 1 | 0.57 | 5 | 50 | 50 | 88 |
| Embodiment 2 | 0.58 | 3 | 60 | 100 | 90 |
| Embodiment 3 | 0.55 | 15 | 110 | 70 | 87 |
| Embodiment 4 | 0.57 | 8 | 80 | 50 | 91 |
| Embodiment 5 | 0.56 | 12 | 30 | 40 | 87 |

It can be learned from the foregoing embodiments and the comparative example that, in the curved glass prepared in the method in this application, the glass base layer and the texture layer are of an integrated structure, and the texture layer is directly formed on a glass surface, so that the overall curved glass is lighter and thinner, presents better effect, and has better light transmittance.

In the description of this specification, descriptions referring to the terms such as "one embodiment", "some embodiments", "example embodiments", "examples", "specific examples", or "some examples" mean that specific features, structures, materials, or characteristics described with reference to this embodiment or example are included in at least one embodiment or example of this application. In this specification, illustrative expressions of the foregoing terms do not necessarily refer to a same embodiment or example. Furthermore, the described specific features, structures, materials, or characteristics may be combined in any one or more embodiments or examples in a suitable manner.

Although embodiments of this application have been shown and described, a person of ordinary skill in the art may understand that various changes, modifications, replacements, and variations may be made to these embodiments without departing from the principles and objectives of this application, and the scope of this application is defined by the claims and equivalents thereof.

## Claims

1. Curved glass, wherein the curved glass comprises a glass base layer (1) and a texture layer (2) formed on one or both sides of the glass base layer (1), the texture layer (2) and the glass base layer (1) are of an integrated structure, and a thickness of the texture layer (2) is in a value range of 1-20 µm.

2. The curved glass according to claim 1, wherein the thickness of the texture layer (2) is in a value range of 1-10 µm.

3. The curved glass according to claim 1 or 2, wherein a width of a texture at the texture layer (2) is in a value range of 1-200 µm.

4. The curved glass according to claim 3, wherein the width of the texture at the texture layer (2) is in a value range of 5-150 µm.

5. The curved glass according to any one of claims 1 to 4, wherein a spacing d between adjacent textures is in a value range of 1-200 µm.

6. The curved glass according to claim 5, wherein the spacing d between adjacent textures is in a value range of 5-150 µm.

7. The curved glass according to any one of claims 1 to 6, wherein a thickness of the curved glass is in a value range of 0.3-3 mm.

8. The curved glass according to claim 7, wherein the thickness of the curved glass is in a value range of 0.5-2 mm.

9. The curved glass according to any one of claims 1 to 8, wherein the texture at the texture layer (2) presents at least one of a regular pattern and an irregular pattern.

10. The curved glass according to claim 9, wherein the texture at the texture layer (2) presents at least one of a rectangle and a wave.

11. A preparation method for the curved glass according to any one of claims 1 to 10, wherein the method comprises the following steps:
(1) forming a film layer on one or both sides of a glass substrate by using a nucleating agent;
(2) removing a part of the film layer, and retaining a predetermined texture pattern on the glass substrate;
(3) processing the glass substrate with the texture pattern, so that a glass surface layer in a texture pattern region is microcrystallized; and
(4) performing hot bending processing on a glass base body obtained through processing in step (3), and then performing etching.

12. The preparation method for the curved glass according to claim 11, wherein in step (1), a thickness of the film layer is in a value range of 10-200 nm.

13. The preparation method for the curved glass according to claim 12, wherein in step (1), the thickness of the film layer is in a value range of 50-150 nm.

14. The preparation method for the curved glass according to any one of claims 11 to 13, wherein the nucleating agent is selected from at least one of a metal nucleating agent, an oxide nucleating agent, and a fluoride nucleating agent.

15. The preparation method for the curved glass according to claim 14, wherein the metal nucleating agent comprises at least one of Ag, Cu, and Pt.

16. The preparation method for the curved glass according to claim 14 or 15, wherein the oxide nucleating agent comprises at least one of TiO2 and ZrO2.

17. The preparation method for the curved glass according to any one of claims 14 to 16, wherein the fluoride nucleating agent comprises at least one of CaF2 and MgF2.

18. The preparation method for the curved glass according to any one of claims 11 to 17, wherein the glass substrate comprises at least one of lithium-aluminum-silicon glass, calcium-aluminum-silicon glass, and magnesium-aluminum-silicon glass.

19. The preparation method for the curved glass according to any one of claims 11 to 18, wherein in step (2), the part of the film layer is removed through laser engraving.

20. The preparation method for the curved glass according to any one of claims 11 to 18, wherein the texture pattern is at least one of a regular pattern and an irregular pattern.

21. The preparation method for the curved glass according to claim 20, wherein the texture pattern is at least one of a rectangle and a wave.

22. The preparation method for the curved glass according to any one of claims 11 to 21, wherein in step (3), a manner of the processing is heat treatment.

23. The preparation method for the curved glass according to claim 22, wherein a process of the heat treatment is performed in the presence of a protective gas, and a condition for the heat treatment comprises: a heating rate is 1°C/min to 10°C/min, a temperature is 550°C to 880°C, and a time is 1h to 6h.

24. The preparation method for the curved glass according to claim 23, wherein the condition for the heat treatment comprises: the heating rate is 5°C/min to 10°C/min.

25. The preparation method for the curved glass according to claim 23 or 24, wherein the condition for the heat treatment comprises: the temperature is 600°C to 850°C.

26. The preparation method for the curved glass according to any one of claims 23 to 25, wherein the condition for the heat treatment comprises: the time is 2h to 4h.

27. The preparation method for the curved glass according to any one of claims 23 to 26, wherein the process of the heat treatment comprises: in the presence of the protective gas, heating up to 550°C to 650°C at the heating rate of 5°C/min to 10°C/min, holding for 0.5h to 2h, heating up to 700°C to 880°C at a heating rate of 1°C/min to 5°C/min, and holding for 1h to 4h.

28. The preparation method for the curved glass according to any one of claims 11 to 27, wherein in step (4), a condition for the hot bending processing comprises: a temperature is 700°C to 800°C, and a time is 10 min to 30 min.

29. The preparation method for the curved glass according to any one of claims 11 to 28, wherein in step (4), a process of the etching comprises: immersing, in an etching solution, the glass base body after hot bending processing.

30. The preparation method for the curved glass according to claim 29, wherein the etching solution comprises HF.

31. Curved glass prepared by applying the preparation method for the curved glass according to any one of claims 11 to 30.
